# EUROPEAN PATENT APPLICATION

(11) **EP 4 841 861 A1**
(43) Date of publication of application: **18.11.2026**
(21) Application number: 26178892.1
(22) Date of filing: 15.05.2026
(51) Int. Cl.: H02J 9/06, H02M 5/458, H02M 7/23, H02M 7/487, H02M 7/493

(54) **UNINTERRUPTIBLE POWER SUPPLY**

(30) Priority: 16.05.2025 CN 202510640383
(71) Applicant: Huawei Digital Power Technologies Co., Ltd., Shenzhen, Guangdong 518043 (CN)
(72) Inventor: HU, Zhilun, Shenzhen, 518043 (CN)
(74) Representative: Isarpatent

(57) **Abstract**

An embodiment of this application discloses an uninterruptible power supply and relates to the field of power electronics technologies, to improve efficiency of the uninterruptible power supply in a case in which a respective rectifier circuit for each phase includes a plurality of single-phase rectifier units connected in parallel or a respective inverter circuit for each phase includes a plurality of single-phase inverter units connected in parallel. On a main path of the uninterruptible power supply, input ends of a three-phase rectifier circuit are connected to three-phase alternating current input ends. A controller is configured to: in a case of higher output currents at the three-phase load ends, control more single-phase rectifier units in the respective rectifier circuit for each phase to operate, or control more single-phase inverter units in the respective inverter circuit for each phase to operate.

## Description

### TECHNICAL FIELD

This application relates to the field of power electronics technologies, and in particular, to an uninterruptible power supply.

### BACKGROUND

A double-conversion uninterruptible power supply (UPS) includes three-phase alternating current input ends, a main path, a bypass path, and three-phase load ends. The main path and the bypass path are both configured to supply power to the three-phase load ends. Specifically, a three-phase rectifier circuit and a three-phase inverter circuit are disposed on the main path, input ends of the three-phase rectifier circuit are connected to the three-phase alternating current input ends, output ends of the three-phase rectifier circuit and input ends of the three-phase inverter circuit are both connected to a direct current bus, and output ends of the three-phase inverter circuit are connected to the three-phase load ends. A respective rectifier circuit for each phase is configured to convert an unreliable alternating current into a direct current, and a respective inverter circuit for each phase is configured to convert a direct current into a reliable and stable alternating current.

The respective rectifier circuit for each phase includes a plurality of single-phase rectifier units connected in parallel, and the respective inverter circuit for each phase includes a plurality of single-phase inverter units connected in parallel, so that the uninterruptible power supply can meet the high-power demand of the load.

However, in a case in which the uninterruptible power supply has a low load ratio, if the plurality of single-phase rectifier units connected in parallel in the respective rectifier circuit for each phase still operate synchronously, each single-phase rectifier unit has a low load ratio, or if the plurality of single-phase inverter units connected in parallel in the respective inverter circuit for each phase still operate synchronously, each single-phase inverter unit has a low load ratio. As a result, the uninterruptible power supply has a relatively high loss and low efficiency. Therefore, in a case in which the respective rectifier circuit for each phase includes a plurality of single-phase rectifier units connected in parallel or the respective inverter circuit for each phase includes a plurality of single-phase inverter units connected in parallel, how to improve efficiency of the uninterruptible power supply becomes an urgent problem to resolve.

### SUMMARY

An embodiment of this application provides an uninterruptible power supply, to improve efficiency of the uninterruptible power supply in a case in which a respective rectifier circuit for each phase includes a plurality of single-phase rectifier units connected in parallel or a respective inverter circuit for each phase includes a plurality of single-phase inverter units connected in parallel.

To achieve the foregoing objective, the following technical solutions are used in embodiments of this application.

According to a first aspect of embodiments of this application, an uninterruptible power supply is provided. The uninterruptible power supply includes a controller, three-phase alternating current input ends, a main path, a bypass path, and three-phase load ends, and the main path and the bypass path are both configured to supply power to the three-phase load ends. A three-phase rectifier circuit and a three-phase inverter circuit are disposed on the main path, input ends of the three-phase rectifier circuit are connected to the three-phase alternating current input ends, output ends of the three-phase rectifier circuit and input ends of the three-phase inverter circuit are both connected to a direct current bus, the direct current bus includes a positive direct current bus and a negative direct current bus, and output ends of the three-phase inverter circuit are connected to the three-phase load ends. A respective rectifier circuit for each phase includes a plurality of single-phase rectifier units connected in parallel, and a respective inverter circuit for each phase includes a plurality of single-phase inverter units connected in parallel. The controller is configured to: in a case of higher output currents at the three-phase load ends, control more single-phase rectifier units in the respective rectifier circuit for each phase to operate, or control more single-phase inverter units in the respective inverter circuit for each phase to operate.

According to this solution, when the uninterruptible power supply operates properly, output voltages at the three-phase load ends remain constant. Higher output currents at the three-phase load ends indicate a higher output power of the uninterruptible power supply and a higher load ratio of the uninterruptible power supply. In this case, the controller controls more single-phase rectifier units in the respective rectifier circuit for each phase to operate, or controls more single-phase inverter units in the respective inverter circuit for each phase to operate. It may be understood that, in a case of lower output currents at the three-phase load ends and a lower load ratio of the uninterruptible power supply, the controller controls fewer single-phase rectifier units in the respective rectifier circuit for each phase to operate, or controls fewer single-phase inverter units in the respective inverter circuit for each phase to operate. Therefore, when the load ratio of the uninterruptible power supply is low, there is a small quantity of single-phase rectifier units that operate in the respective rectifier circuit for each phase, increasing load ratios of the single-phase rectifier units that operate, or there is a small quantity of single-phase inverter units that operate in the respective inverter circuit for each phase, increasing load ratios of the single-phase inverter units that operate. In this way, the uninterruptible power supply has a relatively low loss, improving efficiency of the uninterruptible power supply. In addition, the uninterruptible power supply can meet the power supply requirement of the load.

With reference to the first aspect, in an implementation, the controller is further configured to: in a case of a higher load ratio of the uninterruptible power supply, control more single-phase rectifier units in the respective rectifier circuit for each phase to operate, or control more single-phase inverter units in the respective inverter circuit for each phase to operate.

According to this solution, in the case of a higher load ratio of the uninterruptible power supply, the controller controls more single-phase rectifier units in the respective rectifier circuit for each phase to operate, or controls more single-phase inverter units in the respective inverter circuit for each phase to operate. It may be understood that, in a case of a lower load ratio of the uninterruptible power supply, the controller controls fewer single-phase rectifier units in the respective rectifier circuit for each phase to operate, or controls fewer single-phase inverter units in the respective inverter circuit for each phase to operate. Therefore, when the load ratio of the uninterruptible power supply is low, there is a small quantity of single-phase rectifier units that operate in the respective rectifier circuit for each phase, increasing load ratios of the single-phase rectifier units that operate, or there is a small quantity of single-phase inverter units that operate in the respective inverter circuit for each phase, increasing load ratios of the single-phase inverter units that operate. In this way, the uninterruptible power supply has a relatively low loss, improving efficiency of the uninterruptible power supply. In addition, the uninterruptible power supply can meet the power supply requirement of the load.

With reference to the first aspect, in an implementation, the controller is further configured to: in a case of higher voltages at the three-phase alternating current input ends, control fewer single-phase rectifier units in the respective rectifier circuit for each phase to operate, or control fewer single-phase inverter units in the respective inverter circuit for each phase to operate.

According to this solution, higher voltages at the three-phase alternating current input ends indicate a lower load ratio of the uninterruptible power supply. In this case, the controller controls fewer single-phase rectifier units in the respective rectifier circuit for each phase to operate, or controls fewer single-phase inverter units in the respective inverter circuit for each phase to operate. Therefore, when the load ratio of the uninterruptible power supply is low, there is a small quantity of single-phase rectifier units that operate in the respective rectifier circuit for each phase, increasing load ratios of the single-phase rectifier units that operate, or there is a small quantity of single-phase inverter units that operate in the respective inverter circuit for each phase, increasing load ratios of the single-phase inverter units that operate. In this way, the uninterruptible power supply has a relatively low loss, improving efficiency of the uninterruptible power supply. In addition, the uninterruptible power supply can meet the power supply requirement of the load.

With reference to the first aspect, in an implementation, the uninterruptible power supply further includes bus capacitors connected between the positive direct current bus and the negative direct current bus. The controller is further configured to: in a case of lower tolerances of devices or lower capacitances and shorter lifespans of the bus capacitors in the uninterruptible power supply, control fewer single-phase rectifier units in the respective rectifier circuit for each phase to operate, or control fewer single-phase inverter units in the respective inverter circuit for each phase to operate.

According to this solution, lower tolerances of the devices or lower capacitances and shorter lifespans of the bus capacitors in the uninterruptible power supply indicate a lower load ratio of the uninterruptible power supply. In this case, the controller controls fewer single-phase rectifier units in the respective rectifier circuit for each phase to operate, or controls fewer single-phase inverter units in the respective inverter circuit for each phase to operate. Therefore, when the load ratio of the uninterruptible power supply is low, there is a small quantity of single-phase rectifier units that operate in the respective rectifier circuit for each phase, increasing load ratios of the single-phase rectifier units that operate, or there is a small quantity of single-phase inverter units that operate in the respective inverter circuit for each phase, increasing load ratios of the single-phase inverter units that operate. In this way, the uninterruptible power supply has a relatively low loss, improving efficiency of the uninterruptible power supply. In addition, the uninterruptible power supply can meet the power supply requirement of the load.

With reference to the first aspect, in an implementation, the uninterruptible power supply further includes a DC-DC power converter circuit, a first power end of the DC-DC power converter circuit is configured to connect to an energy storage battery, and a second power end of the DC-DC power converter circuit is connected to the direct current bus. The controller is further configured to: in a case of a higher voltage at the first power end, control fewer single-phase rectifier units in the respective rectifier circuit for each phase to operate, or control fewer single-phase inverter units in the respective inverter circuit for each phase to operate.

According to this solution, a higher voltage at the first power end indicates a lower load ratio of the uninterruptible power supply. In this case, the controller controls fewer single-phase rectifier units in the respective rectifier circuit for each phase to operate, or controls fewer single-phase inverter units in the respective inverter circuit for each phase to operate. Therefore, when the load ratio of the uninterruptible power supply is low, there is a small quantity of single-phase rectifier units that operate in the respective rectifier circuit for each phase, increasing load ratios of the single-phase rectifier units that operate, or there is a small quantity of single-phase inverter units that operate in the respective inverter circuit for each phase, increasing load ratios of the single-phase inverter units that operate. In this way, the uninterruptible power supply has a relatively low loss, improving efficiency of the uninterruptible power supply. In addition, the uninterruptible power supply can meet the power supply requirement of the load.

With reference to the first aspect, in an implementation, each single-phase rectifier unit includes an inductor, a diode bridge arm, a first switching transistor, and a second switching transistor, where the diode bridge arm is connected between the positive direct current bus and the negative direct current bus, the diode bridge arm includes a first diode and a second diode that are connected in series, the inductor is connected between an input end of the single-phase rectifier unit and a midpoint of the diode bridge arm, a drain or collector of the first switching transistor is connected to the midpoint of the diode bridge arm, a source or an emitter of the first switching transistor is connected to a source or an emitter of the second switching transistor, and a drain or collector of the second switching transistor is configured to connect to a neutral wire. The controller is further configured to control operating statuses of the first switching transistor and the second switching transistor, and the operating statuses include: among the three-phase alternating current input ends, a one-phase alternating current input end receives a positive half cycle and a negative half cycle of an alternating current, and the first switching transistor and the second switching transistor in the single-phase rectifier unit corresponding to the one-phase alternating current input end both operate properly; or the first switching transistor in the single-phase rectifier unit corresponding to the one-phase alternating current input stops operating during the positive half cycle and operates properly during the negative half cycle, and the second switching transistor operates properly during both the positive half cycle and the negative half cycle; or the second switching transistor in the single-phase rectifier unit corresponding to the one-phase alternating current input operates properly during the positive half cycle and stops operating during the negative half cycle, and the first switching transistor operates properly during both the positive half cycle and the negative half cycle.

According to this solution, the controller is configured to control the operating statuses of the first switching transistor and the second switching transistor. When the load ratio of the uninterruptible power supply is low, the controller controls the first switching transistor to stop operating during the positive half cycle, or controls the second switching transistor to stop operating during the negative half cycle, reducing a control loss and a switching loss of the switching transistors in the single-phase rectifier unit, and improving efficiency of the uninterruptible power supply.

With reference to the first aspect, in an implementation, the controller is further configured to control the first switching transistor to operate at a high frequency and the second switching transistor to operate at a power frequency.

According to this solution, switching and drive losses of the second switching transistor can be reduced, and efficiency of the uninterruptible power supply can be improved.

With reference to the first aspect, in an implementation, the first switching transistor is a MOS. The controller is further configured to: in a case in which a direction of a current in the first switching transistor is consistent with a conduction direction of a body diode in the first switching transistor, control the first switching transistor to be turned off if a first conduction loss of the first switching transistor is greater than a second conduction loss, or control the first switching transistor to be turned on if a first conduction loss is less than or equal to a second conduction loss. The first conduction loss is a loss that is caused in a case in which the first switching transistor is turned on, and the second conduction loss is a conduction loss that is of the body diode in the first switching transistor and that is caused in a case in which the first switching transistor is turned off.

According to this solution, compared with an IGBT that conducts in one direction, a MOS conducts in two directions. In a case in which the direction of the current is consistent with the conduction direction of the body diode in the MOS, the conduction loss caused in a case in which the MOS is turned on may differ from the conduction loss of the body diode caused in a case in which the MOS is turned off. Through comparison of the two conduction losses, the MOS is controlled to be in a state with a low conduction loss. In this way, a conduction loss of the first switching transistor can be reduced, and efficiency of the uninterruptible power supply can be improved.

With reference to the first aspect, in an implementation, the second switching transistor is a MOS. The controller is further configured to: in a case in which a direction of a current in the second switching transistor is consistent with a conduction direction of a body diode in the second switching transistor, control the second switching transistor to be turned off if a first conduction loss of the second switching transistor is greater than a second conduction loss, or control the second switching transistor to be turned on if a first conduction loss is less than or equal to a second conduction loss. The first conduction loss is a loss that is caused in a case in which the second switching transistor is turned on, and the second conduction loss is a conduction loss that is of the body diode in the second switching transistor and that is caused in a case in which the second switching transistor is turned off.

According to this solution, compared with an IGBT that conducts in one direction, a MOS conducts in two directions. In a case in which the direction of the current is consistent with the conduction direction of the body diode in the MOS, the conduction loss caused in a case in which the MOS is turned on may differ from the conduction loss of the body diode caused in a case in which the MOS is turned off. Through comparison of the two conduction losses, the MOS is controlled to be in a state with a low conduction loss. In this way, a conduction loss of the second switching transistor can be reduced, and efficiency of the uninterruptible power supply can be improved.

With reference to the first aspect, in an implementation, the controller is further configured to: when a voltage of the direct current bus drops to a preset voltage threshold, control the DC-DC power converter circuit to boost a voltage of a direct current output by the energy storage battery, to increase the voltage of the direct current bus to be greater than or equal to a bus voltage threshold, where the voltage of the direct current bus is an absolute value of a voltage difference between the positive direct current bus and the negative direct current bus.

According to this solution, when the voltage of the direct current bus drops to the preset voltage threshold, the controller controls the DC-DC power converter circuit to boost the voltage of the direct current output by the energy storage battery, to increase the voltage of the direct current bus to be greater than or equal to the bus voltage threshold. In this way, stability of the uninterruptible power supply can be improved, and stable operation of the load can be ensured.

With reference to the first aspect, in an implementation, the controller is further configured to: when the voltage of the direct current bus drops to the preset voltage threshold, control all the single-phase inverter units in the respective inverter circuit for each phase to operate, and control, in a manner of voltage fast-loop regulation, all the single-phase rectifier units in the respective rectifier circuit for each phase to operate, to increase the voltage of the direct current bus to be greater than or equal to the bus voltage threshold, where the voltage of the direct current bus is the absolute value of the voltage difference between the positive direct current bus and the negative direct current bus.

According to this solution, when the voltage of the direct current bus drops to the preset voltage threshold, the controller controls all the single-phase inverter units in the respective inverter circuit for each phase to operate, and controls, in the manner of voltage fast-loop regulation, all the single-phase rectifier units in the respective rectifier circuit for each phase to operate, to increase the voltage of the direct current bus to be greater than or equal to the bus voltage threshold. In this way, stability of the uninterruptible power supply can be improved, and stable operation of the load can be ensured.

### BRIEF DESCRIPTION OF DRAWINGS

FIG. 1 is a schematic of a circuit topology of an uninterruptible power supply according to an embodiment of this application;
FIG. 2 is another schematic of the circuit topology of the uninterruptible power supply according to an embodiment of this application;
FIG. 3 is still another schematic of the circuit topology of the uninterruptible power supply according to an embodiment of this application;
FIG. 4 is a schematic flowchart of a control method for the uninterruptible power supply according to an embodiment of this application;
FIG. 5 is a diagram of drive waveforms according to an embodiment of this application;
FIG. 6 is another diagram of drive waveforms according to an embodiment of this application; and
FIG. 7 is a schematic of a circuit topology of a photovoltaic inverter according to an embodiment of this application.

### DESCRIPTION OF EMBODIMENTS

The following describes production and use of embodiments in detail. It should be understood, however, that many applicable inventive concepts provided in this application may be implemented in a variety of specific environments. The specific embodiments described are merely used to describe specific manners of implementing and using this specification and this technology, and do not limit a scope of this application.

Unless otherwise defined, all scientific and technological terms used in this specification have the same meanings as those commonly known to a person of ordinary skill in the art.

Circuits or other components may be described or referred to as "configured to" perform one or more tasks. In this case, "configured to" is used to imply a structure by indicating that a circuit/component includes a structure that performs one or more tasks during operation (for example, a circuit system). Therefore, even when a specified circuit/component is currently inoperable (for example, not turned on), the circuit/component may still be referred to as being configured to perform the task. A circuit/component used with the phrase "configured to" includes hardware, for example, a circuit performing an operation.

The following describes the technical solutions in embodiments of this application with reference to the accompanying drawings in embodiments of this application. In this application, "at least one phase" means one or more phases, and "a plurality of" means two or more. The character "/" typically indicates an "or" relationship between associated objects. In addition, in embodiments of this application, words such as "first" and "second" do not limit a quantity or an order.

In this application, an expression such as "example" or "for example" is used to represent providing an example, illustration, or explanation. Any embodiment or design solution described by using "example" or "for example" in this application should not be explained as being more preferred or having more advantages than another embodiment or design solution. To be precise, use of the expression such as "example" or "for example" is intended to present a related concept in a specific manner.

Before embodiments of this application are described, technical terms and background technologies related to this application are described.

An uninterruptible power supply is configured to provide an uninterruptible power supply to a load with a high requirement for power stability. The uninterruptible power supply is widely used in fields such as data centers, medical equipment, industrial automation, and communication equipment, to provide a stable and uninterruptible power supply for critical equipment.

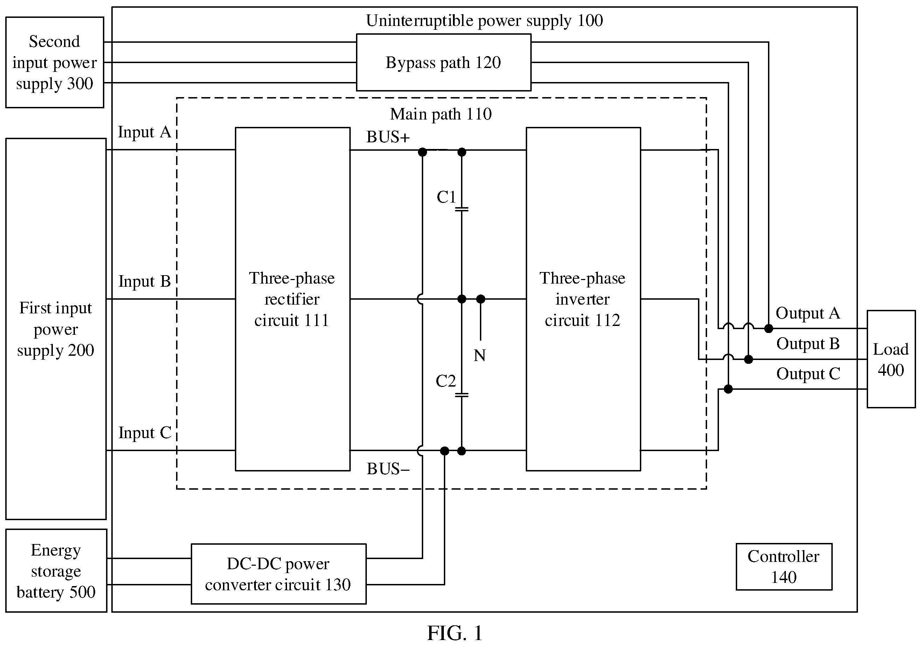

FIG. 1 is a schematic of a circuit topology of an uninterruptible power supply 100 according to an embodiment of this application. The uninterruptible power supply 100 includes three-phase alternating current input ends (Input A, Input B, and Input C), a main path 110, a bypass path 120, and three-phase load ends (Output A, Output B, and Output C). An input end of the main path 110 is connected to the three-phase alternating current input ends (Input A, Input B, and Input C). The three-phase alternating current input ends (Input A, Input B, and Input C) are configured to connect to a first input power supply 200. An input end of the bypass path 120 is configured to connect to a second input power supply 300. An output end of the main path 110 and an output end of the bypass path 120 are both connected to the three-phase load ends (Output A, Output B, and Output C). The main path 110 and the bypass path 120 are both configured to supply power to the three-phase load ends (Output A, Output B, and Output C). The three-phase load ends (Output A, Output B, and Output C) are configured to connect to a load 400, to supply power to the load 400.

With reference to FIG. 1, a three-phase rectifier circuit 111 and a three-phase inverter circuit 112 are disposed on the main path 110. Input ends of the three-phase rectifier circuit 111 are connected to the three-phase alternating current input ends (Input A, Input B, and Input C). Output ends of the three-phase rectifier circuit 111 and input ends of the three-phase inverter circuit 112 are both connected to a direct current bus. The direct current bus includes a positive direct current bus (BUS+) and a negative direct current bus (BUS-). Output ends of the three-phase inverter circuit 112 are connected to the three-phase load ends (Output A, Output B, and Output C). The uninterruptible power supply 100 further includes bus capacitors connected between the positive direct current bus (BUS+) and the negative direct current bus (BUS-). The bus capacitors include a first bus capacitor C1 and a second bus capacitor C2 that are connected in series. A joint between the first bus capacitor C1 and the second bus capacitor C2 is configured to connect to a neutral wire (neutral wire, N).

Still with reference to FIG. 1, the uninterruptible power supply 100 further includes a direct current to direct current (direct current to direct current, DC-DC) power converter circuit 130. A first power end of the DC-DC power converter circuit 130 is configured to connect to an energy storage battery 500, and a second power end of the DC-DC power converter circuit 130 is configured to connect to the direct current bus.

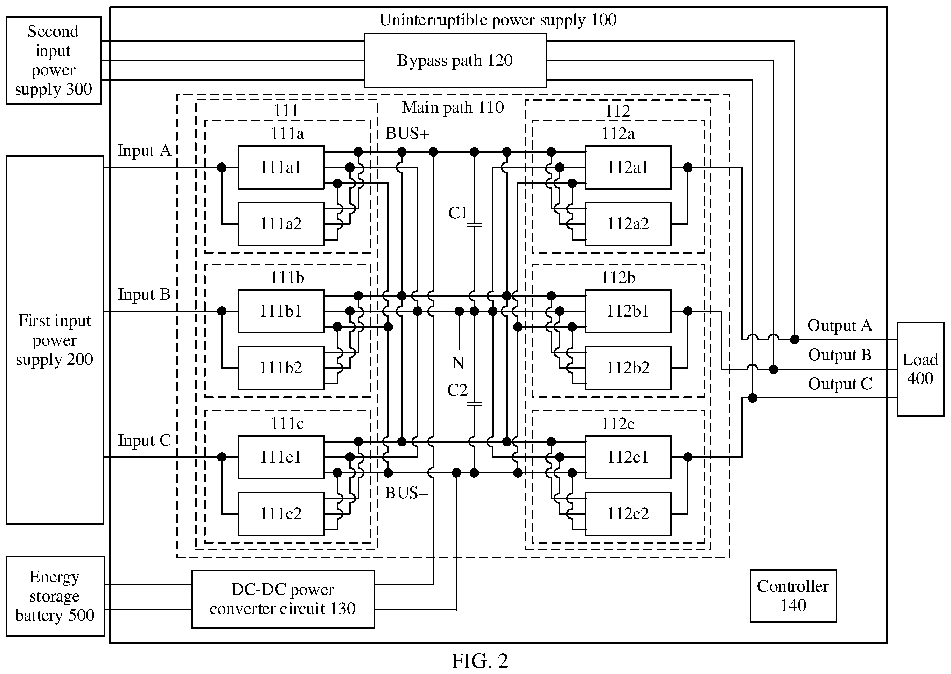

With reference to FIG. 1, FIG. 2 is another schematic of the circuit topology of the uninterruptible power supply 100 according to an embodiment of this application. In the three-phase rectifier circuit 111, a phase-A rectifier circuit 111a includes two single-phase rectifier units 111a1 and 111a2 that are connected in parallel, a phase-B rectifier circuit 111b includes two single-phase rectifier units 111b1 and 111b2 that are connected in parallel, and a phase-C rectifier circuit 111c includes two single-phase rectifier units 111c1 and 111c2 that are connected in parallel. The respective rectifier circuit for each phase may be a power factor correction (power factor correction, PFC) circuit. In the three-phase inverter circuit 112, a phase-A inverter circuit 112a includes two single-phase inverter units 112a1 and 112a2 that are connected in parallel, a phase-B inverter circuit 112b includes two single-phase inverter units 112b1 and 112b2 that are connected in parallel, and a phase-C inverter circuit 112c includes two single-phase inverter units 112c1 and 112c2 that are connected in parallel.

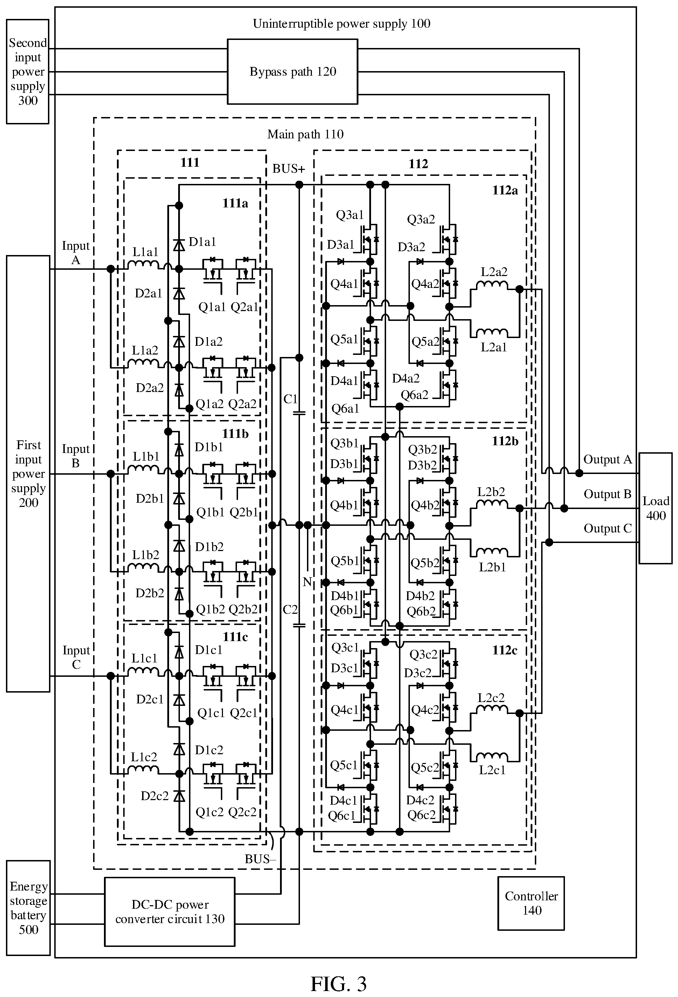

With reference to FIG. 2, FIG. 3 is still another schematic of the circuit topology of the uninterruptible power supply 100 according to an embodiment of this application. Specifically, of the single-phase rectifier units:
the single-phase rectifier unit 111a1 includes a first inductor L1a1, a first diode D1a1, a second diode D2a1, a first switching transistor Q1a1, and a second switching transistor Q2a1;
the single-phase rectifier unit 111a2 includes a first inductor L1a2, a first diode D1a2, a second diode D2a2, a first switching transistor Q1a2, and a second switching transistor Q2a2;
the single-phase rectifier unit 111b1 includes a first inductor L1b1, a first diode D1b1, a second diode D2b1, a first switching transistor Q1b1, and a second switching transistor Q2b1;
the single-phase rectifier unit 111b2 includes a first inductor L1b2, a first diode D1b2, a second diode D2b2, a first switching transistor Q1b2, and a second switching transistor Q2b2;
the single-phase rectifier unit 111c1 includes a first inductor L1c1, a first diode D1c1, a second diode D2c1, a first switching transistor Q1c1, and a second switching transistor Q2c1; and
the single-phase rectifier unit 111c2 includes a first inductor L1c2, a first diode D1c2, a second diode D2c2, a first switching transistor Q1c2, and a second switching transistor Q2c2.

With reference to FIG. 3, the single-phase rectifier unit 111a1 is used as an example. The first diode D1a1 and the second diode D2a1 are connected in series and may be referred to as a diode bridge arm. The diode bridge arm is connected between the positive direct current bus (BUS+) and the negative direct current bus (BUS-). The first inductor L1a1 is connected between an input end of the single-phase rectifier unit 111a1 and a midpoint of the diode bridge arm. A drain or collector of the first switching transistor Q1a1 is connected to the midpoint of the diode bridge arm, and a source or an emitter of the first switching transistor Q1a1 is connected to a source or an emitter of the second switching transistor Q2a1. A drain or collector of the second switching transistor Q2a1 is configured to connect to the neutral wire N. For connection relationships between the devices in the other single-phase rectifier units, refer to connection relationships between the devices in the single-phase rectifier unit 111a1. Details are not described again in this embodiment of this application.

Still with reference to FIG. 3, of the single-phase inverter units:
the single-phase inverter unit 112a1 includes a second inductor L2a1, a third switching transistor Q3a1, a fourth switching transistor Q4a1, a fifth switching transistor Q5a1, a sixth switching transistor Q6a1, a third diode D3a1, and a fourth diode D4a1;
the single-phase inverter unit 112a2 includes a second inductor L2a2, a third switching transistor Q3a2, a fourth switching transistor Q4a2, a fifth switching transistor Q5a2, a sixth switching transistor Q6a2, a third diode D3a2, and a fourth diode D4a2;
the single-phase inverter unit 112b1 includes a second inductor L2b1, a third switching transistor Q3b1, a fourth switching transistor Q4b1, a fifth switching transistor Q5b1, a sixth switching transistor Q6b1, a third diode D3b1, and a fourth diode D4b1;
the single-phase inverter unit 112b2 includes a second inductor L2b2, a third switching transistor Q3b2, a fourth switching transistor Q4b2, a fifth switching transistor Q5b2, a sixth switching transistor Q6b2, a third diode D3b2, and a fourth diode D4b2;
the single-phase inverter unit 112c1 includes a second inductor L2c1, a third switching transistor Q3c1, a fourth switching transistor Q4c1, a fifth switching transistor Q5c1, a sixth switching transistor Q6c1, a third diode D3c1, and a fourth diode D4c1; and
the single-phase inverter unit 112c2 includes a second inductor L2c2, a third switching transistor Q3c2, a fourth switching transistor Q4c2, a fifth switching transistor Q5c2, a sixth switching transistor Q6c2, a third diode D3c2, and a fourth diode D4c2.

Still with reference to FIG. 3, the single-phase inverter unit 112a1 is used as an example. The third switching transistor Q3a1 and the fourth switching transistor Q4a1 are connected in series and may be referred to as an upper bridge arm. The upper bridge arm is connected between the positive direct current bus (BUS+) and a first end of the second inductor L2a1. The fifth switching transistor Q5a1 and the sixth switching transistor Q6a1 are connected in series and may be referred to as a lower bridge arm. The lower bridge arm is connected between the negative direct current bus (BUS-) and the first end of the second inductor L2a1. A second end of the second inductor L2a1 is connected to an output end of the single-phase inverter unit 112a1. The third diode D3a1 and the fourth diode D4a1 are connected in series between a midpoint of the upper bridge arm and a midpoint of the lower bridge arm. An anode of the third diode D3a1 and a cathode of the fourth diode D4a1 are configured to connect to the neutral wire N. For connection relationships between the devices in the other single-phase inverter units, refer to connection relationships between the devices in the single-phase inverter unit 112a1. Details are not described again in this embodiment of this application.

The switching transistors in this embodiment of this application may be metal-oxide-semiconductor field-effect transistors (metal-oxide-semiconductor field-effect transistors, MOSFETs). The metal-oxide-semiconductor field-effect transistors may also be referred to as MOS transistors for short. Each MOS transistor includes a body diode that is reverse-biased. Alternatively, the switching transistors in this embodiment of this application may be insulated gate bipolar transistors (insulated gate bipolar transistors, IGBTs). The uninterruptible power supply 100 may further include diodes that are connected to the IGBTs in anti-parallel in a one-to-one correspondence manner. For example, with reference to FIG. 3, the first switching transistor Q1a1 to the sixth switching transistor Q6a1 may be MOSs, and each MOS includes a body diode that is reverse-biased.

When the uninterruptible power supply 100 operates, the two single-phase rectifier units connected in parallel in the respective rectifier circuit for each phase operate synchronously, or the two single-phase inverter units connected in parallel in the respective inverter circuit for each phase operate synchronously. In this way, the uninterruptible power supply 100 can meet the high-power demand of the load 400.

However, in a case in which the load 400 has a low-power demand and the uninterruptible power supply 100 has a low load ratio, if the two single-phase rectifier units connected in parallel in the respective rectifier circuit for each phase operate synchronously, each single-phase rectifier unit has a low load ratio, or if the two single-phase inverter units connected in parallel in the respective inverter circuit for each phase operate synchronously, each single-phase inverter unit has a low load ratio. As a result, the uninterruptible power supply 100 has a relatively high loss and low efficiency.

Based on this, an embodiment of this application provides an uninterruptible power supply, to improve efficiency of the uninterruptible power supply in a case in which a respective rectifier circuit for each phase includes a plurality of single-phase rectifier units connected in parallel or a respective inverter circuit for each phase includes a plurality of single-phase inverter units connected in parallel.

In this embodiment of this application, neither of the following two items is limited: a specific quantity of the single-phase rectifier units that are connected in parallel and included in the respective rectifier circuit for each phase, and a specific quantity of the single-phase inverter units that are connected in parallel and included in the respective inverter circuit for each phase. With reference to FIG. 1 to FIG. 3, a circuit topology of the uninterruptible power supply provided in this embodiment of this application may be the circuit topology of the uninterruptible power supply 100. In this embodiment of this application, an example is used for illustration purposes, in which the circuit topology of the uninterruptible power supply is the circuit topology of the uninterruptible power supply 100, and the uninterruptible power supply 100 further includes a controller 140.

With reference to FIG. 1 to FIG. 3, when the uninterruptible power supply 100 operates properly, output voltages at the three-phase load ends (Output A, Output B, and Output C) remain constant. In this case, higher output currents at the three-phase load ends (Output A, Output B, and Output C) indicate a higher output power of the uninterruptible power supply 100 and a higher load ratio of the uninterruptible power supply 100. The controller 140 is configured to: obtain the output currents at the three-phase load ends (Output A, Output B, and Output C); and in a case of higher output currents at the three-phase load ends (Output A, Output B, and Output C) and a higher load ratio of the uninterruptible power supply 100, control more single-phase rectifier units in the respective rectifier circuit for each phase to operate, or control more single-phase inverter units in the respective inverter circuit for each phase to operate. It may be understood that, in a case of lower output currents at the three-phase load ends (Output A, Output B, and Output C) and a lower load ratio of the uninterruptible power supply 100, the controller 140 controls fewer single-phase rectifier units in the respective rectifier circuit for each phase to operate, or controls fewer single-phase inverter units in the respective inverter circuit for each phase to operate. Therefore, when the load ratio of the uninterruptible power supply 100 is low, there is a small quantity of single-phase rectifier units that operate in the respective rectifier circuit for each phase, increasing load ratios of the single-phase rectifier units that operate, or there is a small quantity of single-phase inverter units that operate in the respective inverter circuit for each phase, increasing load ratios of the single-phase inverter units that operate. In this way, the uninterruptible power supply 100 has a relatively low loss, improving efficiency of the uninterruptible power supply 100. In addition, the uninterruptible power supply 100 can meet the power supply requirement of the load 400.

For example, with reference to FIG. 2, when the output currents at the three-phase load ends (Output A, Output B, and Output C) are low and the load ratio of the uninterruptible power supply 100 is low, the controller 140 may control the single-phase rectifier unit 111a1 in the phase-A rectifier circuit 111a to operate, control the single-phase rectifier unit 111a2 to stop operating, control the single-phase rectifier unit 111b1 in the phase-B rectifier circuit 111b to operate, control the single-phase rectifier unit 111b2 to stop operating, control the single-phase rectifier unit 111c1 in the phase-C rectifier circuit 111c to operate, and control the single-phase rectifier unit 111c2 to stop operating, improving load ratios of the single-phase rectifier unit 111a1, the single-phase rectifier unit 111b1, and the single-phase rectifier unit 111c1. In this way, the uninterruptible power supply 100 has a relatively low loss, improving efficiency of the uninterruptible power supply 100. In addition, the uninterruptible power supply 100 can meet the power supply requirement of the load 400.

For another example, with reference to FIG. 2, when the output currents at the three-phase load ends (Output A, Output B, and Output C) are low and the load ratio of the uninterruptible power supply 100 is low, the controller 140 may control the single-phase inverter unit 112a1 in the phase-A inverter circuit 112a to operate, control the single-phase inverter unit 112a2 to stop operating, control the single-phase inverter unit 112b1 in the phase-B inverter circuit 112b to operate, control the single-phase inverter unit 112b2 to stop operating, control the single-phase inverter unit 112c1 in the phase-C inverter circuit 112c to operate, and control the single-phase inverter unit 112c2 to stop operating, improving load ratios of the single-phase inverter unit 112a1, the single-phase inverter unit 112b1, and the single-phase inverter unit 112c1. In this way, the uninterruptible power supply 100 has a relatively low loss, improving efficiency of the uninterruptible power supply 100. In addition, the uninterruptible power supply 100 can meet the power supply requirement of the load.

In an implementation, the controller 140 may obtain the output voltages and output currents at the three-phase load ends (Output A, Output B, and Output C), calculate the output power of the uninterruptible power supply 100, and then calculate the load ratio of the uninterruptible power supply 100 based on the output power of the uninterruptible power supply 100. The controller 140 is further configured to: in a case of a higher load ratio of the uninterruptible power supply 100, control more single-phase rectifier units in the respective rectifier circuit for each phase to operate, or control more single-phase inverter units in the respective inverter circuit for each phase to operate. It may be understood that, in a case of a lower load ratio of the uninterruptible power supply 100, the controller 140 controls fewer single-phase rectifier units in the respective rectifier circuit for each phase to operate, or controls fewer single-phase inverter units in the respective inverter circuit for each phase to operate.

In an implementation, that the controller 140 obtains the output voltages at the three-phase load ends (Output A, Output B, and Output C) includes: obtaining phase voltages of the three-phase load ends (Output A, Output B, and Output C), or obtaining line voltages between the three-phase load ends (Output A, Output B, and Output C).

With reference to FIG. 1 to FIG. 3, in the uninterruptible power supply 100, the controller 140 may alternatively determine, based on another parameter, that the load ratio of the uninterruptible power supply 100 is low, and when determining that the load ratio of the uninterruptible power supply 100 is low, control fewer single-phase rectifier units in the respective rectifier circuit for each phase to operate, or control fewer single-phase inverter units in the respective inverter circuit for each phase to operate, improving efficiency of the uninterruptible power supply 100. Specifically, the following is included.

In an implementation, higher voltages at the three-phase alternating current input ends (Input A, Input B, and Input C) indicate a lower load ratio of the uninterruptible power supply 100. The controller 140 is further configured to: obtain the voltages at the three-phase alternating current input ends (Input A, Input B, and Input C); and in a case of higher voltages at the three-phase alternating current input ends (Input A, Input B, and Input C), control fewer single-phase rectifier units in the respective rectifier circuit for each phase to operate, or control fewer single-phase inverter units in the respective inverter circuit for each phase to operate.

In an implementation, that the controller obtains the voltages at the three-phase alternating current input ends (Input A, Input B, and Input C) includes: obtaining phase voltages of the three-phase alternating current input ends (Input A, Input B, and Input C), or obtaining line voltages between the three-phase alternating current input ends (Input A, Input B, and Input C).

In an implementation, lower tolerances of devices or lower capacitances and shorter lifespans of the bus capacitors in the uninterruptible power supply 100 indicate a lower load ratio of the uninterruptible power supply 100. The tolerances of the devices in the uninterruptible power supply 100 are maximum ranges by which actual parameter values of the devices are allowed to deviate from nominal values of the devices. The tolerances of the devices or the capacitances and lifespans of the bus capacitors in the uninterruptible power supply 100 are provided by device vendors when the devices are delivered, and may be pre-stored in a storage device in the controller 140 or in a storage device in the uninterruptible power supply 100, so that the controller 140 can obtain the tolerances of the devices or the capacitances and lifespans of the bus capacitors in the uninterruptible power supply 100. The controller 140 may further execute an algorithm to update the tolerances of the devices or the capacitances and lifespans of the bus capacitors in the uninterruptible power supply 100. The controller 140 is further configured to: in a case of lower tolerances of the devices or lower capacitances and shorter lifespans of the bus capacitors in the uninterruptible power supply 100, control fewer single-phase rectifier units in the respective rectifier circuit for each phase to operate, or control fewer single-phase inverter units in the respective inverter circuit for each phase to operate.

In an implementation, a voltage at the first power end of the DC-DC power converter circuit 130 may also be referred to as a voltage of the energy storage battery 500. A higher voltage at the first power end of the DC-DC power converter circuit 130 indicates a lower load ratio of the uninterruptible power supply 100. The controller 140 is further configured to: obtain the voltage at the first power end of the DC-DC power converter circuit 130; and in a case of a higher voltage at the first power end, control fewer single-phase rectifier units in the respective rectifier circuit for each phase to operate, or control fewer single-phase inverter units in the respective inverter circuit for each phase to operate.

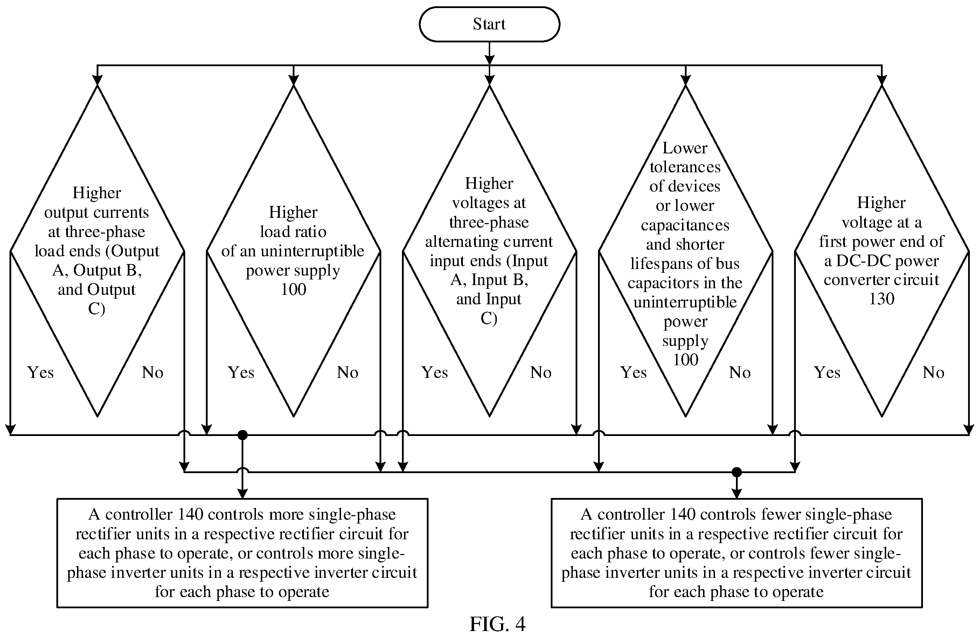

In an implementation, FIG. 4 is a schematic flowchart of a control method for the uninterruptible power supply 100 according to an embodiment of this application. For a flow that the controller 140 follows when controlling, based on the parameters, a quantity of single-phase rectifier units that operate in the respective rectifier circuit for each phase and a quantity of single-phase inverter units that operate in the respective inverter circuit for each phase, refer to the schematic flowchart of the control method for the uninterruptible power supply 100.

In an implementation, when the controller 140 controls, based on all of the plurality of parameters, the quantity of single-phase rectifier units that operate in the respective rectifier circuit for each phase and the quantity of single-phase inverter units that operate in the respective inverter circuit for each phase, a manner in which efficiency of the uninterruptible power supply 100 is optimal may be selected, to control the quantity of single-phase rectifier units that operate in the respective rectifier circuit for each phase, and the quantity of single-phase inverter units that operate in the respective inverter circuit for each phase.

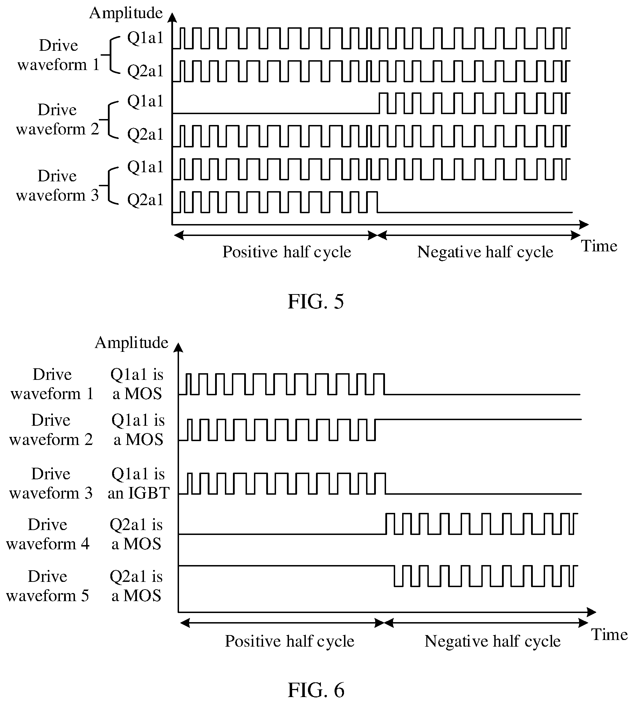

In an implementation, with reference to FIG. 3, the controller 140 is further configured to control operating statuses of the first switching transistor and the second switching transistor in each single-phase rectifier unit. FIG. 5 is a diagram of drive waveforms according to an embodiment of this application. With the single-phase rectifier unit 111a1 in the phase-A rectifier circuit 111a as an example, the operating statuses include: As shown by a drive waveform 1 in FIG. 5, the phase-A alternating current input end (Input A) receives a positive half cycle and a negative half cycle of an alternating current, and the first switching transistor Q1a1 and the second switching transistor Q2a1 in the single-phase rectifier unit 111a1 corresponding to the phase-A alternating current input end (Input A) both operate properly; or as shown by a drive waveform 2 in FIG. 5, the first switching transistor Q1a1 in the single-phase rectifier unit 111a1 stops operating during the positive half cycle and operates properly during the negative half cycle, and the second switching transistor Q2a1 operates properly during both the positive half cycle and the negative half cycle; or as shown by a drive waveform 3 in FIG. 5, the second switching transistor Q2a1 in the single-phase rectifier unit 111a1 operates properly during the positive half cycle and stops operating during the negative half cycle, and the first switching transistor Q1a1 operates properly during both the positive half cycle and the negative half cycle. When the load ratio of the uninterruptible power supply 100 is low, the controller 140 may control the first switching transistor Q1a1 to stop operating during the positive half cycle, or control the second switching transistor Q2a1 to stop operating during the negative half cycle, reducing a control loss and a switching loss of the switching transistors in the single-phase rectifier unit 111a1, and improving efficiency of the uninterruptible power supply 100.

In an implementation, with the single-phase rectifier unit 111a1 as an example, the controller 140 is further configured to control the first switching transistor Q1a1 to operate at a high frequency and the second switching transistor Q2a1 to operate at a power frequency, where the power frequency is a rated frequency of a power grid. In this way, switching and drive losses of the second switching transistor Q2a1 can be reduced, and efficiency of the uninterruptible power supply 100 can be improved.

In an implementation, FIG. 6 is another diagram of drive waveforms according to an embodiment of this application. With reference to FIG. 3, with the single-phase rectifier unit 111a1 as an example, the first switching transistor Q1a1 is a MOS. The controller 140 is further configured to: during a negative half cycle, in a case in which a direction of a current in the first switching transistor Q1a1 is consistent with a conduction direction of a body diode in the first switching transistor Q1a1, control the first switching transistor Q1a1 to be turned off, as shown by a drive waveform 1 in FIG. 6, if a first conduction loss of the first switching transistor Q1a1 is greater than a second conduction loss, or control the first switching transistor Q1a1 to be turned on, as shown by a drive waveform 2 in FIG. 6, if a first conduction loss is less than or equal to a second conduction loss. The first conduction loss is a loss that is caused in a case in which the first switching transistor Q1a1 is turned on. The second conduction loss is a conduction loss that is of the body diode in the first switching transistor Q1a1 and that is caused in a case in which the first switching transistor Q1a1 is turned off.

In an implementation, the first switching transistor Q1a1 is an IGBT. The controller 140 is further configured to: during a negative half cycle, in a case in which a direction of a current in the first switching transistor Q1a1 is consistent with a conduction direction of a diode that is connected to the first switching transistor Q1a1 in anti-parallel, control the first switching transistor Q1a1 to be turned off, as shown by a drive waveform 3 in FIG. 6, because the IGBT conducts in one direction. In this way, a control loss of the first switching transistor Q1a1 can be reduced, and efficiency of the uninterruptible power supply 100 can be improved.

In an implementation, with reference to FIG. 3, with the single-phase rectifier unit 111a1 as an example, the second switching transistor Q2a1 is a MOS. The controller 140 is further configured to: during a positive half cycle, in a case in which a direction of a current in the second switching transistor Q2a1 is consistent with a conduction direction of a body diode in the second switching transistor Q2a1, control the second switching transistor Q2a1 to be turned off, as shown by a drive waveform 4 in FIG. 6, if a first conduction loss of the second switching transistor Q2a1 is greater than a second conduction loss, or control the second switching transistor Q2a1 to be turned on, as shown by a drive waveform 5 in FIG. 6, if a first conduction loss is less than or equal to a second conduction loss. The first conduction loss is a loss that is caused in a case in which the second switching transistor Q2a1 is turned on. The second conduction loss is a conduction loss that is of the body diode in the second switching transistor Q2a1 and that is caused in a case in which the second switching transistor Q2a1 is turned off.

In an implementation, the solution for controlling a switching transistor in a single-phase rectifier unit provided in this embodiment of this application may also be used for controlling a switching transistor in a single-phase inverter unit. Details are not described herein again in this embodiment of this application.

According to the uninterruptible power supply 100 provided in this embodiment of this application, when the load ratio of the uninterruptible power supply 100 is low, the controller 140 controls fewer single-phase rectifier units in the respective rectifier circuit for each phase to operate, or controls fewer single-phase inverter units in the respective inverter circuit for each phase to operate. Therefore, there is a small quantity of single-phase rectifier units that operate in the respective rectifier circuit for each phase, increasing load ratios of the single-phase rectifier units that operate, or there is a small quantity of single-phase inverter units that operate in the respective inverter circuit for each phase, increasing load ratios of the single-phase inverter units that operate. In this way, the uninterruptible power supply 100 has a relatively low loss, improving efficiency of the uninterruptible power supply 100. In addition, the uninterruptible power supply 100 can meet the power supply requirement of the load 400.

In an implementation, with reference to FIG. 1 to FIG. 3, the controller 140 is further configured to: obtain a voltage of the direct current bus; and when the voltage of the direct current bus drops to a preset voltage threshold due to an increase in power consumption of the load 400 or a decrease in a voltage of the first input power supply 200, control the DC-DC power converter circuit 130 to boost a voltage of a direct current output by the energy storage battery 500, to increase the voltage of the direct current bus to be greater than or equal to a bus voltage threshold. The voltage of the direct current bus is an absolute value of a voltage difference between the positive direct current bus (BUS+) and the negative direct current bus (BUS-). In this embodiment of this application, values of the preset voltage threshold and the bus voltage threshold are related to parameters of the devices in the uninterruptible power supply 100. Specific values of the preset voltage threshold and the bus voltage threshold are not limited in this embodiment of this application.

In an implementation, with reference to FIG. 1 to FIG. 3, the controller 140 is further configured to: when the voltage of the direct current bus drops to the preset voltage threshold, control all the single-phase inverter units in the respective inverter circuit for each phase to operate, and control, in a manner of voltage fast-loop regulation, all the single-phase rectifier units in the respective rectifier circuit for each phase to operate, to increase the voltage of the direct current bus to be greater than or equal to the bus voltage threshold. Voltage fast-loop regulation is a voltage control mechanism that is based on feedback control principles and features quick response, high precision, and strong anti-interference capabilities, and can adjust a voltage in real time to maintain stability.

According to the uninterruptible power supply 100 provided in this embodiment of this application, when the voltage of the direct current bus drops to the preset voltage threshold, the controller 140 controls the DC-DC power converter circuit 130 to boost the voltage of the direct current output by the energy storage battery 500, or controls all the single-phase inverter units in the respective inverter circuit for each phase to operate, and controls, in the manner of voltage fast-loop regulation, all the single-phase rectifier units in the respective rectifier circuit for each phase to operate, to increase the voltage of the direct current bus to be greater than or equal to the bus voltage threshold. In this way, stability of the uninterruptible power supply 100 can be improved, and stable operation of the load 400 can be ensured.

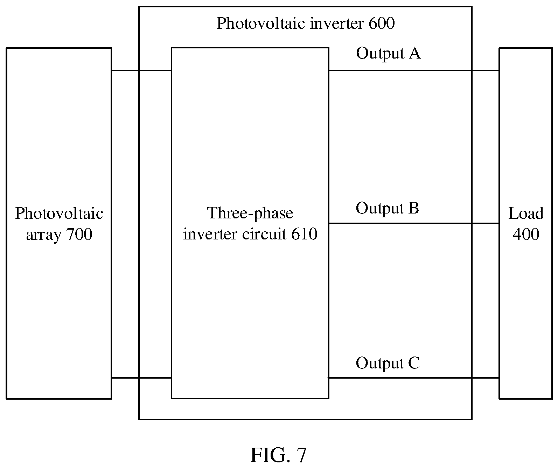

In an implementation, the solutions provided in this embodiment of this application may also be used on photovoltaic inverters or frequency converters, to improve efficiency of the photovoltaic inverters or frequency converters. For example, FIG. 7 is a schematic of a circuit topology of a photovoltaic inverter 600 according to an embodiment of this application. The photovoltaic inverter 600 includes a three-phase inverter circuit 610 and three-phase load ends (Output A, Output B, and Output C). Input ends of the three-phase inverter circuit 610 are configured to connect to a photovoltaic array 700, and output ends of the three-phase inverter circuit 610 are connected to Output A, Output B, and Output C. The three-phase load ends (Output A, Output B, and Output C) are configured to connect to a load 400, to supply power to the load 400. A specific circuit topology of the three-phase inverter circuit 610 may be the same as the circuit topology of the three-phase inverter circuit 112 in FIG. 2 or FIG. 3. The foregoing related descriptions of the three-phase inverter circuit 112 may all be correspondingly cited as descriptions of the three-phase inverter circuit 610. Details are not described herein again in this embodiment of this application.

The foregoing descriptions are merely specific implementations of this application, but the protection scope of this application is not limited thereto. Any variation or replacement within the technical scope disclosed in this application shall fall within the protection scope of this application. Therefore, the protection scope of this application shall be subject to the protection scope of the claims.

## Claims

1. An uninterruptible power supply, wherein the uninterruptible power supply comprises a controller, three-phase alternating current input ends, a main path, a bypass path, and three-phase load ends, and the main path and the bypass path are both configured to supply power to the three-phase load ends;
a three-phase rectifier circuit and a three-phase inverter circuit are disposed on the main path, input ends of the three-phase rectifier circuit are connected to the three-phase alternating current input ends, output ends of the three-phase rectifier circuit and input ends of the three-phase inverter circuit are both connected to a direct current bus, the direct current bus comprises a positive direct current bus and a negative direct current bus, and output ends of the three-phase inverter circuit are connected to the three-phase load ends, wherein a respective rectifier circuit for each phase comprises a plurality of single-phase rectifier units connected in parallel, and a respective inverter circuit for each phase comprises a plurality of single-phase inverter units connected in parallel; and
the controller is configured to: in a case of higher output currents at the three-phase load ends, control more single-phase rectifier units in the respective rectifier circuit for each phase to operate, or control more single-phase inverter units in the respective inverter circuit for each phase to operate.

2. The uninterruptible power supply according to claim 1, wherein
the controller is further configured to: in a case of a higher load ratio of the uninterruptible power supply, control more single-phase rectifier units in the respective rectifier circuit for each phase to operate, or control more single-phase inverter units in the respective inverter circuit for each phase to operate.

3. The uninterruptible power supply according to claim 1 or 2, wherein
the controller is further configured to: in a case of higher voltages at the three-phase alternating current input ends, control fewer single-phase rectifier units in the respective rectifier circuit for each phase to operate, or control fewer single-phase inverter units in the respective inverter circuit for each phase to operate.

4. The uninterruptible power supply according to any one of claims 1 to 3, wherein the uninterruptible power supply further comprises bus capacitors connected between the positive direct current bus and the negative direct current bus; and
the controller is further configured to: in a case of lower tolerances of devices or lower capacitances and shorter lifespans of the bus capacitors in the uninterruptible power supply, control fewer single-phase rectifier units in the respective rectifier circuit for each phase to operate, or control fewer single-phase inverter units in the respective inverter circuit for each phase to operate.

5. The uninterruptible power supply according to any one of claims 1 to 4, wherein the uninterruptible power supply further comprises a DC-DC power converter circuit, a first power end of the DC-DC power converter circuit is configured to connect to an energy storage battery, and a second power end of the DC-DC power converter circuit is connected to the direct current bus; and
the controller is further configured to: in a case of a higher voltage at the first power end, control fewer single-phase rectifier units in the respective rectifier circuit for each phase to operate, or control fewer single-phase inverter units in the respective inverter circuit for each phase to operate.

6. The uninterruptible power supply according to any one of claims 1 to 5, wherein each single-phase rectifier unit comprises an inductor, a diode bridge arm, a first switching transistor, and a second switching transistor, wherein the diode bridge arm is connected between the positive direct current bus and the negative direct current bus, the diode bridge arm comprises a first diode and a second diode that are connected in series, the inductor is connected between an input end of the single-phase rectifier unit and a midpoint of the diode bridge arm, a drain or collector of the first switching transistor is connected to the midpoint of the diode bridge arm, a source or an emitter of the first switching transistor is connected to a source or an emitter of the second switching transistor, and a drain or collector of the second switching transistor is configured to connect to a neutral wire; and
the controller is further configured to control operating statuses of the first switching transistor and the second switching transistor, and the operating statuses comprise:
among the three-phase alternating current input ends, a one-phase alternating current input end receives a positive half cycle and a negative half cycle of an alternating current, and the first switching transistor and the second switching transistor in the single-phase rectifier unit corresponding to the one-phase alternating current input end both operate properly; or
the first switching transistor in the single-phase rectifier unit corresponding to the one-phase alternating current input stops operating during the positive half cycle and operates properly during the negative half cycle, and the second switching transistor operates properly during both the positive half cycle and the negative half cycle; or
the second switching transistor in the single-phase rectifier unit corresponding to the one-phase alternating current input operates properly during the positive half cycle and stops operating during the negative half cycle, and the first switching transistor operates properly during both the positive half cycle and the negative half cycle.

7. The uninterruptible power supply according to claim 6, wherein
the controller is further configured to control the first switching transistor to operate at a high frequency and the second switching transistor to operate at a power frequency.

8. The uninterruptible power supply according to claim 6 or 7, wherein the first switching transistor is a MOS; and
the controller is further configured to: in a case in which a direction of a current in the first switching transistor is consistent with a conduction direction of a body diode in the first switching transistor, control the first switching transistor to be turned off if a first conduction loss of the first switching transistor is greater than a second conduction loss, or control the first switching transistor to be turned on if the first conduction loss is less than or equal to the second conduction loss, wherein
the first conduction loss is a loss that is caused in a case in which the first switching transistor is turned on, and the second conduction loss is a conduction loss that is of the body diode in the first switching transistor and that is caused in a case in which the first switching transistor is turned off.

9. The uninterruptible power supply according to any one of claims 6 to 8, wherein the second switching transistor is a MOS; and
the controller is further configured to: in a case in which a direction of a current in the second switching transistor is consistent with a conduction direction of a body diode in the second switching transistor, control the second switching transistor to be turned off if a first conduction loss of the second switching transistor is greater than a second conduction loss, or control the second switching transistor to be turned on if the first conduction loss is less than or equal to a second conduction loss, wherein
the first conduction loss is a loss that is caused in a case in which the second switching transistor is turned on, and the second conduction loss is a conduction loss that is of the body diode in the second switching transistor and that is caused in a case in which the second switching transistor is turned off.

10. The uninterruptible power supply according to claim 5, wherein
the controller is further configured to: when a voltage of the direct current bus drops to a preset voltage threshold, control the DC-DC power converter circuit to boost a voltage of a direct current output by the energy storage battery, to increase the voltage of the direct current bus to be greater than or equal to a bus voltage threshold, wherein the voltage of the direct current bus is an absolute value of a voltage difference between the positive direct current bus and the negative direct current bus.

11. The uninterruptible power supply according to any one of claims 1 to 10, wherein
the controller is further configured to: when the voltage of the direct current bus drops to the preset voltage threshold, control all the single-phase inverter units in the respective inverter circuit for each phase to operate, and control, in a manner of voltage fast-loop regulation, all the single-phase rectifier units in the respective rectifier circuit for each phase to operate, to increase the voltage of the direct current bus to be greater than or equal to the bus voltage threshold, wherein the voltage of the direct current bus is the absolute value of the voltage difference between the positive direct current bus and the negative direct current bus.
